# FASCICULE DE BREVET EUROPEEN

(11) **EP 2 697 744 B1**
(45) Date de publication et mention de la délivrance du brevet: **26.10.2016**
(21) Numéro de dépôt: 12712123.4
(22) Date de dépôt: 05.04.2012
(51) Int. Cl.: G06K 7/10, G06K 19/07

(54) **TRANSPONDEUR PASSIF DU TYPE SEMI-DUPLEX**
PASSIVER HALBDUPLEX-TRANSPONDER
PASSIVE HALF-DUPLEX TRANSPONDER

(30) Priorité: 11.04.2011 EP 11161917
(43) Date de publication de la demande: 19.02.2014
(73) Titulaire: EM Microelectronic-Marin SA, 2074 Marin (CH)
(72) Inventeur: RANDJELOVIC, Zoran, CH-2074 Marin (CH)
(74) Mandataire: Surmely, Gérard
(86) Numéro de dépôt international: PCT/EP2012/056271
(87) Numéro de publication internationale: WO 2012/139966

(56) Documents cités:
- DE-A1-102007 041 154
- US-A1- 2005 134 234

## Description

### Domaine technique

La présente invention concerne le domaine des transpondeurs passifs du type semi-duplex (en anglais « half-duplex »), c'est-à-dire fonctionnant en alternat. Ce type de transpondeur comprend un circuit résonant formé par une antenne et une capacité d'entrée, un redresseur agencé en aval du circuit résonant, c'est-à-dire à sa suite, et une capacité de stockage d'énergie agencée en aval du redresseur. Le transpondeur reçoit l'énergie nécessaire à son fonctionnement d'un lecteur qui émet périodiquement un signal d'activation, lequel peut être formé par la porteuse d'un signal continu. Ce signal d'activation peut également être modulé lorsque le lecteur envoie une commande ou des données au transpondeur. Le transpondeur envoie un signal modulé, notamment en fréquence (modulation FSK), dans les intervalles de temps durant lesquels le lecteur ne fournit pas de signal d'activation. Pour ce faire, il est prévu d'entretenir le signal oscillant dans le circuit résonant au moyen de l'énergie stockée dans la capacité de stockage via un interrupteur permettant de relier en parallèle et temporairement la capacité d'entrée à cette capacité de stockage. La méthode classique consiste à alimenter de manière périodique et pour de courtes durées le circuit résonant au moyen de la capacité de stockage pour maintenir, au moins sur une certaine période durant laquelle le transpondeur envoie un signal modulé, une amplitude d'oscillation suffisante et de préférence une tension de crête proche de la tension de la capacité de stockage. Cette méthode est désignée en anglais par le terme 'plucking' que l'on utilisera par la suite.

### Arrière-plan technologique

Un transpondeur du type décrit ci-avant et une méthode de 'plucking' sont connus du document US 5,621,396. De manière à optimiser l'alimentation du circuit résonant en fonction notamment du facteur de qualité du transpondeur, c'est-à-dire de donner suffisamment de puissance pour maintenir une amplitude d'oscillation sur une durée maximale, ce document propose d'agencer un détecteur de pic pour le signal oscillant dans le circuit résonant et de comparer la valeur du pic détecté dans une alternance de ce signal oscillant avec une tension de référence. Dès que la valeur de pic est inférieure à cette tension de référence, il est prévu d'alimenter le circuit résonant via un interrupteur. L'alimentation est prévue seulement de manière périodique par des impulsions identiques, la fréquence d'alimentation varie ainsi en fonction du facteur de qualité du transpondeur.

Le document US 2005/134234 A1 a un enseignement similaire.

### Résumé de l'invention

La présente invention a pour but de fournir un transpondeur passif du type semi-duplex avec un circuit de commande relativement simple permettant d'optimiser l'efficacité de l'entretien du signal électrique oscillant dans son circuit résonant.

A cet effet, la présente invention concerne un transpondeur passif du type semi-duplex comprenant :
- un circuit résonant formé par une antenne et une capacité d'entrée et agencé pour permettre qu'un signal électrique oscille dans ce circuit résonant lorsqu'il reçoit périodiquement sur l'antenne un signal d'activation d'un lecteur;
- un redresseur agencé en aval du circuit résonant ;
- une capacité de stockage d'énergie agencée en aval du redresseur ;
- au moins un interrupteur agencé entre la capacité d'entrée et la capacité de stockage de manière à mettre en parallèle ces deux capacités lorsque l'interrupteur est fermé (ON) ;
- un détecteur de tension de crête agencé pour mesurer l'amplitude du signal électrique oscillant dans le circuit résonant ;
ce transpondeur étant agencé pour envoyer au moins un signal de communication au lecteur dans une période d'émission où le signal d'activation est interrompu, et pour fournir au cours de cette période d'émission des impulsions de 'plucking' dans le circuit résonant de manière à entretenir le signal électrique oscillant en maintenant au moins une certaine amplitude de ce signal électrique oscillant. Ce transpondeur comprend en outre un circuit de détermination d'un seuil de tension variable pour le déclenchement desdites impulsions de 'plucking', ce circuit de détermination d'un seuil de tension variable définissant, pour chaque impulsion de 'plucking' ou pour chaque groupe d'impulsions de 'plucking' successives, un seuil de tension spécifique qui est inférieur en valeur absolue à la dernière tension de crête mesurée par le détecteur de tension de crête relativement à la tension milieu du signal électrique oscillant et dépendant de cette dernière tension de crête mesurée. Le transpondeur est agencé pour déclencher chaque impulsion de 'plucking' lorsque la tension de ce signal électrique oscillant atteint sensiblement le seuil de tension spécifique dans une période respective située avant un extremum du signal électrique oscillant et dans l'alternance de cet extremum.

Par tension milieu du signal électrique oscillant on comprend la tension des deux extrémités de chaque alternance dans le circuit résonant.

Selon une variante préférée de l'invention, le seuil de tension variable est déterminé de manière à être situé dans une plage comprise entre 50% et 90% de la dernière tension de crête mesurée relativement à la tension milieu du signal électrique oscillant.

Selon un mode de réalisation préféré de l'invention, le détecteur de tension de crête mesure la tension de crête dans la première alternance de chaque oscillation du signal électrique oscillant et le circuit de détermination d'un seuil de tension variable détermine à nouveau, suite à chaque mesure de la tension de crête, la tension de seuil spécifique pour le déclenchement d'une impulsion de 'plucking' dans la seconde alternance de la même oscillation.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 montre schématiquement la structure générale d'un mode de réalisation du transpondeur selon l'invention ;
- La Figure 2 montre une variante du signal électrique oscillant dans le circuit résonant du transpondeur qui est suivi par un redresseur à deux alternances, dans une période où ce transpondeur émet un signal de réponse pour un lecteur avec lequel il communique ;
- La Figure 3 montre schématiquement la sélection d'une tension de référence fixe pour gérer les impulsions de 'plucking' selon une variante de l'invention ;
- La Figure 4 montre schématiquement la sélection d'une tension de référence variable pour gérer les impulsions de 'plucking' selon une autre variante de l'invention ; et
- La Figure 5 est une variante de la Figure 4.

### Description détaillée

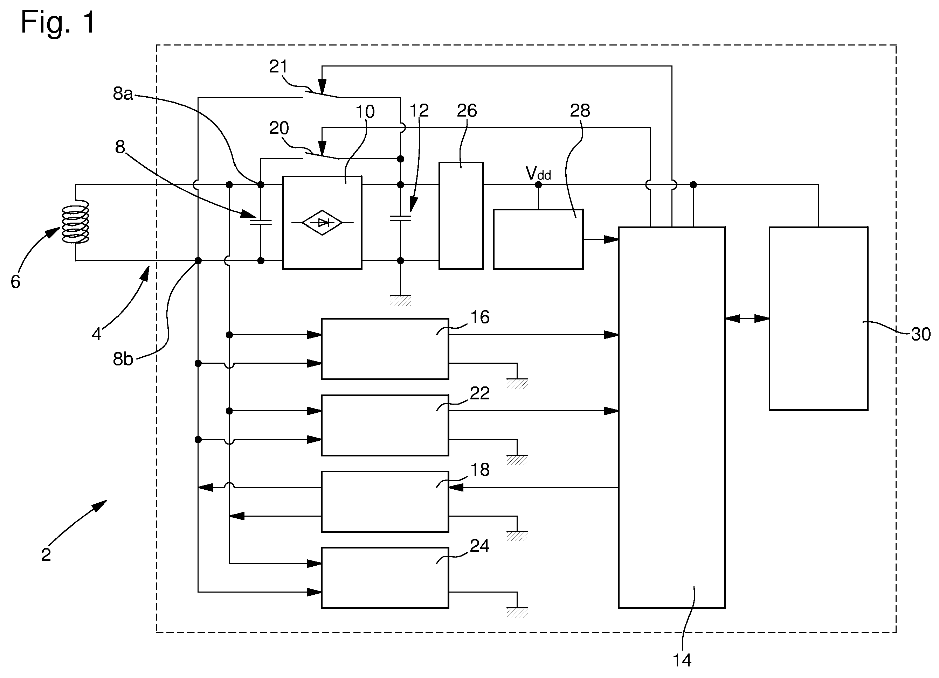

A la Figure 1 est représenté le circuit électronique d'un mode de réalisation général d'un transpondeur passif du type semi-duplex 2 qui comprend :
- un circuit résonant 4 formé par une antenne 6 et une capacité d'entrée 8 qui sont agencées pour permettre qu'un signal électrique oscille dans ce circuit résonant lorsque le transpondeur reçoit périodiquement sur l'antenne un signal d'activation d'un lecteur (non représenté);
- un redresseur à deux alternances 10 agencé en aval du circuit résonant ;
- une capacité de stockage d'énergie 12 agencée en aval du redresseur ;
- un circuit logique 14;
- des moyens pour engendrer un signal d'horloge 16;
- un modulateur 18 relié en entrée au circuit logique et en sortie au circuit résonant;
- un premier interrupteur 20 agencé entre la première borne 8a de la capacité d'entrée 8 et la capacité de stockage 12, de manière à mettre en parallèle ces deux capacités lorsque l'interrupteur 20 est fermé (ON) dans une alternance du signal électrique oscillant apparaissant sur la borne 8a;
- un deuxième interrupteur 21 agencé entre la deuxième borne 8b de la capacité d'entrée 8 et la capacité de stockage 12, de manière à mettre en parallèle ces deux capacités lorsque l'interrupteur 21 est fermé (ON) dans une alternance du signal électrique oscillant apparaissant sur la borne 8b;
- un détecteur de tension de crête 22 agencé pour mesurer au moins périodiquement la tension de crête 34A, 34B, 34C du signal électrique 32 oscillant dans le circuit résonant 4.

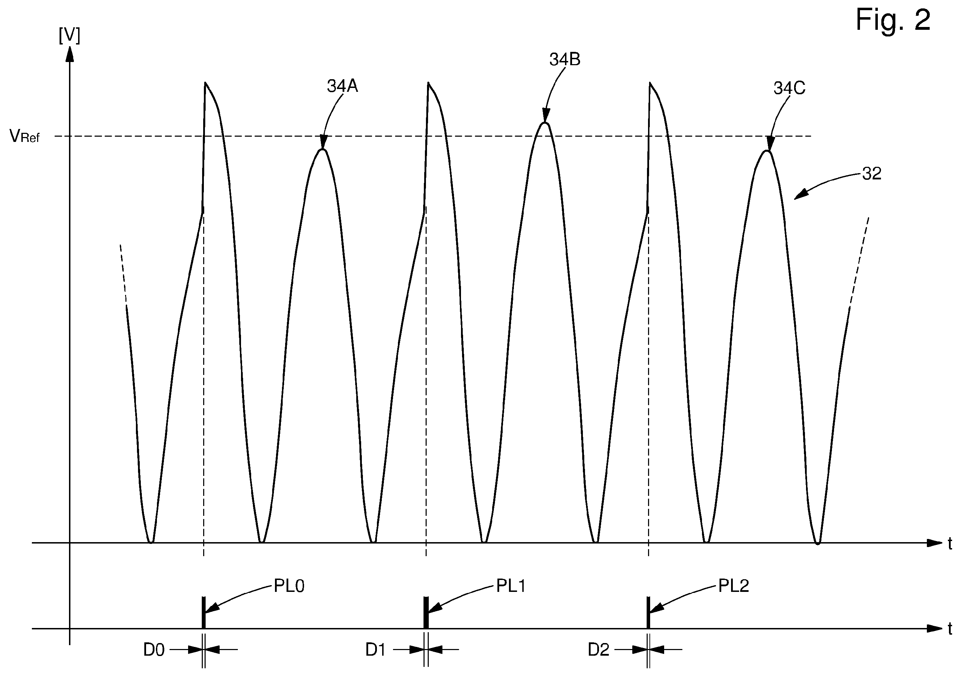

Par tension de crête on comprend de manière générale la valeur de tension pour un extremum du signal oscillant. Dans le cas d'un redresseur à deux alternances et de la configuration du circuit représentée à la Figure 1, le détecteur de crête reçoit en entrée des alternances redressées alternativement depuis les deux bornes 8a et 8b de la capacité d'entrée. Le détecteur reçoit donc un signal 32 tel que représenté à la Figure 2 avec les deux alternances de chaque oscillation définissant chacune un pic de tension positif. Dans d'autres variantes avec un redresseur à une alternance (redresseur demi-onde), on peut distinguer deux cas selon qu'une des deux bornes 8a et 8b est reliée à la masse ou à Vdd (ou Vcap). Dans le cas où la borne 8b reste reliée à la masse, on ne redresse que les alternances positives et on ne peut donc mesurer que la tension de crête de ces alternances positives. Dans le cas où la borne 8a reste reliée à Vdd (ou Vcap), la tension sur la borne 8b variera sensiblement entre zéro et 2Vdd. Dans ce dernier cas, il y a des maximums au-dessus de Vdd et des minimums au-dessous de Vdd (maximums et minimums définissant des extremums). Les impulsions de 'plucking' sont prévues dans les alternances avec les minimums de tension et c'est ces tensions minimums qui sont détectées par le détecteur de tension de crête. Avec un redresseur demi-onde, seul un interrupteur relié à la borne à tension variable est nécessaire.

Le transpondeur 2 de la Figure 1 est agencé pour envoyer au moins un signal de communication au lecteur, dans une période d'émission où le signal d'activation est interrompu, au moyen du modulateur 18 qui module le signal électrique oscillant. A la Figure 2 est représenté le signal électrique oscillant 32 tel qu'il apparaît alternativement aux bornes 8a et 8b de la capacité 8 du circuit résonant. De manière générale, le circuit logique 14 commande l'interrupteur 20 et/ou l'interrupteur 21 de manière à fournir des impulsions de 'plucking' dans le circuit résonant 4 pour entretenir ce signal électrique oscillant en maintenant une certaine amplitude au moins pendant les périodes d'émission. Le circuit logique est agencé pour commander l'interrupteur 20 et/ou l'interrupteur 21 en variant la durée des impulsions de 'plucking' de manière à gérer l'alimentation électrique du circuit résonant par la capacité de stockage 12 pendant les périodes d'émission du transpondeur, et de préférence de manière à optimiser cette alimentation électrique. La durée des impulsions de 'plucking' est nommée durée de 'plucking'. De préférence, le circuit logique 14 est agencé pour effectuer par pas la variation de la durée de 'plucking'. Le transpondeur 2 comprend également un limiteur 24, un régulateur de tension 26, un circuit de gestion de la puissance 28 et une mémoire non-volatile 30.

De manière générale, dans une variante préférée, le détecteur de tension de crête 22 mesure, au moins lorsque le transpondeur émet un signal de communication RF via son antenne 6, au moins périodiquement la tension de crête (extremum) dans une alternance du signal électrique oscillant dans le circuit résonant 4. Cette tension de crête est traitée par le circuit logique 14 pour déterminer la durée de 'plucking' (durée de l'impulsion de 'plucking') au moins dans une alternance ultérieure de ce signal électrique oscillant et pour déterminer le début (c'est-à-dire le déclenchement) de chaque impulsion de 'plucking' dans cette au moins une alternance ultérieure, de manière que le déclenchement de chaque impulsion de 'plucking' intervienne dans une période respective située avant un extremum du signal électrique oscillant et dans l'alternance de cet extremum.

Selon une variante préférée, il est prévu que, lorsque le transpondeur envoie un signal de communication à un lecteur, la tension de crête est mesurée dans la première demi-période de chaque oscillation du circuit résonant et une impulsion de 'plucking' PL0, PL1, PL2 est ensuite fournie dans la seconde demi-période de cette oscillation, comme représenté à la Figure 2. Dans ce cas-ci, on peut se passer de l'un des deux interrupteurs 20 et 21. La mesure de la tension de crête intervient dans chaque alternance qui apparaît sur la borne de la capacité 8 non reliée à l'interrupteur et l'impulsion de 'plucking' est fournie dans chaque alternance suivante qui apparaît sur l'autre borne de la capacité reliée à l'interrupteur. On remarquera que l'on peut aussi concevoir une autre variante où cette mesure est effectuée avec une fréquence moindre que la fréquence d'oscillation et peut servir à déterminer l'envoi de plusieurs impulsions de 'plucking'. On notera qu'il est possible de prévoir que les impulsions de 'plucking' soient fournies périodiquement avec une fréquence inférieure à la fréquence d'oscillation.

Selon une variante particulière, lorsque la tension de crête mesurée dans une alternance est supérieure à une première tension de référence, le circuit logique diminue la durée de 'plucking' au moins dans l'alternance suivante. Cette première tension de référence est de préférence déterminée par le transpondeur lui-même en fonction de la tension initiale de la capacité de stockage d'énergie 12 et éventuellement en fonction du facteur de qualité du transpondeur et donc de l'atténuation du signal électrique oscillant dans le circuit résonant en l'absence d'alimentation ou, de manière équivalente, de la diminution de la tension aux bornes de la capacité de stockage au cours d'une période d'émission du transpondeur lorsque cette capacité alimente le circuit résonant pour maintenir l'amplitude du signal électrique oscillant sensiblement constante.

Selon une première variante spécifique, la première tension de référence reste constante sur chaque période d'émission d'un signal de communication par le transpondeur. Dans cette variante, la valeur constante est soit prédéfinie et écrite dans la mémoire 30, soit elle est déterminée par le transpondeur en fonction de la tension initiale de la capacité de stockage, c'est-à-dire de la valeur de tension de cette capacité au début de la période d'émission. Selon une deuxième variante spécifique, la première tension de référence est une fonction de la tension de ladite capacité de stockage sur ladite période d'émission. Dans cette seconde variante, on peut distinguer trois cas particuliers de fonctionnement du transpondeur. Dans un premier cas, la courbe de cette première tension de référence est prédéfinie et enregistrée dans la mémoire du transpondeur. Dans un deuxième cas, la fonction est prédéfinie, notamment la pente négative d'une droite affine, mais le niveau de la courbe, c'est-à-dire sa valeur initiale, est déterminée en fonction de la valeur initiale de la capacité de stockage. Dans un troisième cas, la tension de la capacité de stockage est mesurée au moins périodiquement au cours d'une période d'émission et la première tension de référence est déterminée au moins par palier en fonction de cette mesure.

Selon une autre variante, lorsque la tension de crête est inférieure à une seconde tension de référence qui est inférieure à la première tension de référence, le circuit logique augmente ladite durée de 'plucking' au moins dans l'alternance suivante. Cette deuxième tension de référence est de préférence déterminée par le transpondeur lui-même selon les mêmes critères que ceux mentionnés pour la première tension de référence. On notera encore que la deuxième tension de référence peut être simplement déterminée en fonction de la première tension de référence. A titre d'exemples, la différence entre ces deux tensions de référence peut être prévue constante ou leur rapport peut être prévu constant. Ainsi, selon une première variante, la deuxième tension de référence reste constante sur chaque période d'émission d'un signal de communication par le transpondeur. Selon une deuxième variante, la deuxième tension de référence est une fonction de la tension de ladite capacité de stockage sur ladite période d'émission ou une fonction de la première tension de référence.

Pour économiser de l'énergie électrique, lorsque le transpondeur envoie un signal de communication à un lecteur, la tension de crête est mesurée seulement périodiquement après un certain nombre de périodes d'oscillation. Dans ce mode de fonctionnement, dans une variante particulière, la durée de 'plucking' est constante durant chaque période formée de ce certain nombre de périodes d'oscillation.

Dans la variante de réalisation représentée à la Figure 2, la seconde tension de référence est identique à ladite première tension de référence et constitue une seule et même tension de référence V_{Ref}. La tension de crête 34A, 34B, 34C est mesurée par le détecteur de tension de crête 22 dans la première demi-période de chaque période d'oscillation, c'est-à-dire de chaque période du signal électrique oscillant dans le circuit résonant 4. Dans la deuxième demi-période de chaque période d'oscillation, une impulsion de 'plucking' PL0, PL1, PL2 est prévue (sauf dans le cas particulier où la durée de 'plucking' serait réduite à zéro dans une variante particulière permettant un tel cas).

La détection de la tension de crête 34A, 34B, 34C est utilisée pour deux fonctions liées à l'entretien du signal électrique oscillant en maintenant une amplitude suffisante à la réception par un lecteur de signaux de communication / de réponse du transpondeur ; et ceci en gérant l'énergie disponible dans la capacité de stockage de manière optimale. La première fonction est la comparaison de cette tension de crête avec une tension de référence V_{Ref} pour ajuster la durée des impulsions de 'plucking'. Dans la variante particulière représentée à la Figure 2, lorsque la tension de crête mesurée 34A est inférieure à V_{Ref}, le circuit logique 14 augmente d'un pas donné la durée de 'plucking' au moins pour la prochaine impulsion de 'plucking' PL1 à une durée D1 supérieure à la durée D0 de l'impulsion de 'plucking' précédente PL0. Lorsque la tension de crête mesurée 34B est supérieure à V_{Ref}, le circuit logique diminue d'un pas donné la durée de 'plucking' au moins pour la prochaine impulsion de 'plucking' PL2 à une durée D2 inférieure à D1.

Pour réduire la consommation d'énergie, la mesure de la tension de crête et la comparaison avec V_{Ref} peuvent se faire seulement périodiquement après un certain nombre de périodes d'oscillation, par exemple toutes les quatre ou cinq périodes d'oscillation, et la durée des impulsions est donc ajustée seulement après ce certain nombre de périodes d'oscillation. La durée des impulsions de 'plucking' est donc constante sur quelques périodes d'oscillation, la variation de cette durée de 'plucking' étant effectuée par palier. Dans une variante particulière, la valeur du pas pour augmenter la durée de 'plucking' est différente de la valeur du pas pour diminuer cette durée de 'plucking', notamment supérieure. Dans une autre variante, la valeur du pas change au cours de la période d'émission, notamment dès qu'une alternance d'augmentations et de diminutions de la durée de 'plucking' est observée la valeur du pas est diminuée.

Selon une variante avantageuse, le circuit logique est agencé pour augmenter ladite durée de 'plucking' jusqu'à une durée maximale donnée. De préférence, lorsque cette durée maximale est atteinte, les impulsions de 'plucking' ultérieures sur la période d'émission concernée ont la durée maximale et la régulation de la durée de 'plucking' est arrêtée pour économiser de l'énergie. On remarquera qu'il est aussi possible de prévoir une durée minimale pour les impulsions de 'plucking'.

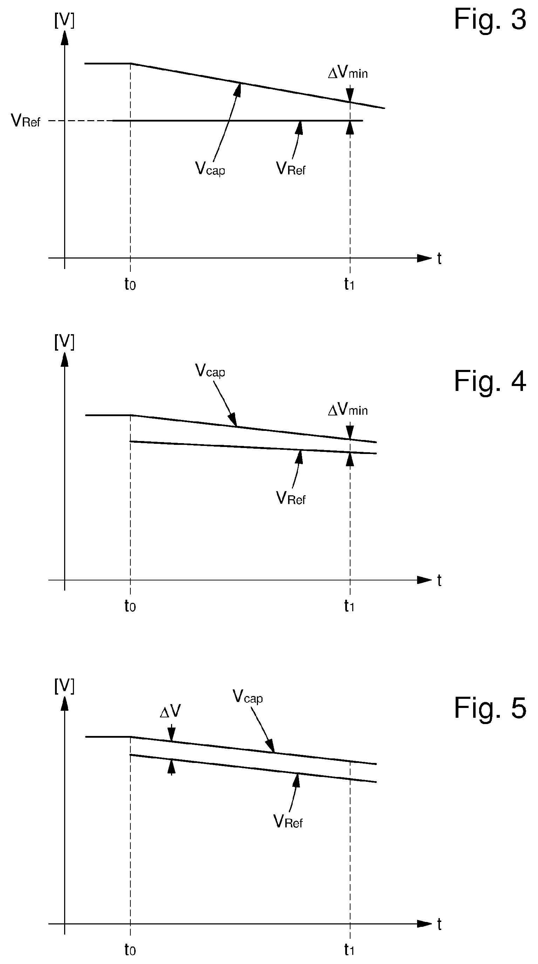

La Figure 3 montre schématiquement une variante, déjà mentionnée précédemment, où la tension de référence V_{Ref} est prévue constante sur chaque période d'émission. Cette tension de référence est sélectionnée de manière à avoir au temps t1, en fin de période d'émission du transpondeur, au moins une différence de tension minimale ΔVₘᵢₙ entre la tension de la capacité de stockage V_{Cap} et V_{Ref}. De préférence, la valeur de la tension de référence est déterminée au temps t0, en début de période d'émission, en fonction de la tension initiale de la capacité de stockage. Dans un mode plus évolué, on peut prévoir de mesurer périodiquement la tension V_{Cap} et si on atteint ΔVₘᵢₙ avant le temps t1, la tension de référence est alors diminuée de manière à conserver au moins cette différence de tension minimale.

Ainsi, dans une variante particulière, seule une première mesure de V_{Cap} est prévue dans une période d'émission d'un signal par le transpondeur. Le niveau de V_{Ref} est donc déterminé en fonction de la tension initiale de la capacité de stockage. Dans une variante plus simple, la tension de référence est prédéterminée en fonction du circuit résonant prévu et du facteur de qualité du transpondeur. Elle reste ainsi fixe. Dans une variante plus sophistiquée, on suit l'évolution de V_{Cap} pour déterminer si la valeur de la tension de référence doit avantageusement être modifiée en cours de période pour cause de comportement particulier ou non standard du transpondeur, notamment dû à un environnement particulier. Cette dernière variante consomme cependant plus d'énergie électrique.

La Figure 4 montre schématiquement une variante où la tension de référence V_{Ref} diminue sur la période d'émission. De préférence, V_{Ref} est une fonction de V_{Cap}. En particulier, V_{Ref} est une fonction proportionnelle ou affine de V_{Cap}. La valeur de V_{Cap} peut être mesurée périodiquement et V_{Ref} est déterminée à nouveau après chaque mesure selon la fonction prévue. On notera que les paramètres de la fonction peuvent être fixes et prédéfinis ou être déterminés en fonction de la valeur initiale de V_{Cap}. De plus, ils peuvent même varier en fonction de l'évolution de V_{Cap}.

La Figure 5 représente une variante particulière où il est prévu que la courbe de la tension de référence suive celle de la tension de la capacité de stockage. En d'autres termes, il est prévu que la différence ΔV entre V_{Cap} et V_{Ref} demeure sensiblement constante.

Dans les variantes où la tension de référence V_{Réf} varie, notamment comme représenté aux Figures 4 et 5, la courbe de cette tension de référence peut être calculée à nouveau pour chaque période d'oscillation suivante ou pour un certain nombre de périodes d'oscillation ultérieures. Cependant, d'autres modes de fonctionnement peuvent aussi être envisagés. Dans une variante particulière, la pente négative de la droite prévue pour V_{Réf} sur une période d'émission d'un signal du transpondeur est prédéfinie et introduite dans la mémoire 30 (sa valeur pouvant dépendre notamment de l'antenne 6 sélectionnée et/ou de l'application prévue, etc.). On peut prévoir dans ce cas une valeur initiale également prédéfinie ou une valeur initiale déterminée en fonction de la valeur initiale de V_{Cap} ; ce qui détermine alors le niveau moyen de la courbe de V_{Réf}. Dans une autre variante plus sophistiquée, on peut prévoir une sorte de système expert qui détermine la valeur de cette pente soit lors d'un test initial du transpondeur ou lors d'un fonctionnement du transpondeur dans un mode d'initialisation. Ce système expert peut intégrer divers paramètres permettant d'ajuster cette pente en fonction de divers critères, en particulier de la valeur initiale de la capacité de stockage au début de la période d'émission. Ce mode d'initialisation peut être activé périodiquement pour tenir compte du vieillissement du transpondeur. On peut évidemment définir une courbe autre qu'une droite pour la tension de référence.

Selon le type d'application, le niveau de sécurité de l'application, la longueur des signaux émis par le transpondeur, l'homme du métier pourra définir le comportement approprié de la courbe de tension de référence dans le but d'optimiser l'alimentation du circuit résonant par la capacité de stockage. Il tiendra compte dans le bilan énergétique du fait que les mesures et comparaisons de valeurs augmentent la consommation du transpondeur et il optimisera la fréquence de ces mesures et comparaisons pour varier la durée des impulsions de 'plucking' et, le cas échéant, la valeur de la tension de référence.

Selon l'invention, la seconde fonction de la mesure de la tension de crête du signal électrique oscillant dans le circuit résonant est de permettre la détermination d'une tension de seuil variable en fonction de cette tension de crête, chaque nouvelle détermination de la tension de seuil servant à définir le début d'au moins une impulsion de 'plucking' dans au moins une alternance ultérieure. Chaque nouvelle valeur de la tension de seuil est déterminée en fonction de la tension de crête mesurée en dernier lieu par le détecteur de tension de crête. On notera que lorsqu'il est prévu de ne mesurer cette tension de crête que périodiquement après un certain nombre de périodes d'oscillation, cette mesure peut servir à définir une tension de seuil pour le déclenchement d'un groupe de plusieurs impulsions de 'plucking' successives.

Comme représenté à la Figure 2, il est prévu de préférence de fournir les impulsions de 'plucking' dans les régions des pics de tension (extremums) du signal électrique oscillant 32. Selon l'invention, il est prévu que le début de chaque impulsion de 'plucking' soit situé dans une période respective située avant un extremum du signal électrique oscillant et dans l'alternance de cet extremum. Ceci permet d'optimiser le transfert d'énergie et de limiter la génération d'harmoniques dans le signal électrique oscillant, c'est-à-dire de limiter la distorsion, notamment lorsque les impulsions de 'plucking' sont relativement longues. En effet, lorsque la tension du signal électrique oscillant augmente, la génération d'une impulsion de 'plucking' dans le flanc croissant va dans le sens naturel de l'oscillation, contrairement au cas où une telle impulsion est fournie dans le flanc décroissant. Ensuite, il est prévu de définir un seuil de tension variable pour commander le déclenchement des impulsions de plucking', ce seuil de tension variable étant inférieur en valeur absolue à la mesure précédente de la tension de crête de la tension du signal électrique oscillant relativement à la tension milieu de ce signal électrique oscillant et une fonction de cette tension de crête, c'est-à-dire dépendant de cette tension de crête. Par exemple, ce seuil de tension variable est égal à 80% de la tension de crête mesurée dans une alternance précédente relativement à la tension milieu du signal électrique oscillant. De préférence, le seuil de tension est sélectionné dans une plage comprise entre 50% et 90% de la tension de crête obtenue lors de la dernière mesure effectuée par le détecteur de tension de crête relativement à la tension milieu du signal électrique oscillant.

Dans la variante préférée représentée à la Figure 2, une mesure de la tension de crête de la tension est effectuée dans chaque oscillation, dans la première alternance de l'oscillation. Pour chaque impulsion de plucking prévue dans la seconde alternance de chaque oscillation, le circuit logique détermine la valeur du seuil de tension, en fonction de la tension de crête 34A, 34B ou 34C, pour commander le début de l'impulsion de plucking, c'est-à-dire le déclenchement de cette impulsion de plucking. On a donc un contrôle dynamique de la tension de seuil pour déclencher les impulsions de plucking ; ce qui permet d'assurer que ces impulsions interviennent toutes de manière optimale. Avec un circuit relativement simple, à savoir un détecteur de tension de crête et un circuit permettant de déterminer un seuil de tension variable, par exemple proportionnel aux valeurs de tension de crête mesurées, on optimise le transfert d'énergie de la capacité de stockage dans le circuit résonant. Dans d'autres modes de réalisation, le circuit de détermination du seuil de tension est formé par exemple par un diviseur résistif ou par des capacités commutées.

De préférence, pour la génération d'une ou plusieurs impulsions de plucking, on utilise la dernière mesure de la tension de crête pour définir un seuil de tension pour le déclenchement de cette ou ces impulsion(s) de plucking. Ce seuil de tension varie donc par palier en fonction de l'amplitude du signal électrique oscillant dans le circuit oscillant.

Finalement, on remarquera que cette deuxième fonction selon l'invention de la mesure de la tension de crête de la tension du signal électrique oscillant peut aussi être avantageusement implémentée dans un transpondeur passif du type semi-duplex ne faisant pas usage de la première fonction mentionnée précédemment pour le détecteur de tension de crête. Aussi la présente invention couvre également de telles réalisations.

## Revendications

1. Transpondeur passif du type semi-duplex (2) comprenant :
- un circuit résonant (4) formé par une antenne (6) et une capacité d'entrée (8) et agencé pour permettre qu'un signal électrique (32) oscille dans ce circuit résonant lorsqu'il reçoit périodiquement sur l'antenne un signal d'activation d'un lecteur;
- un redresseur (10) agencé en aval du circuit résonant ;
- une capacité de stockage d'énergie (12) agencée en aval du redresseur ;
- au moins un interrupteur (20, 21) agencé entre la capacité d'entrée et la capacité de stockage de manière à mettre en parallèle ces deux capacités lorsque l'interrupteur est fermé (ON) ;
- un détecteur de tension de crête (22) agencé pour mesurer l'amplitude dudit signal électrique oscillant (32) dans ledit circuit résonant ; ce transpondeur étant agencé pour envoyer au moins un signal de communication audit lecteur dans une période d'émission où ledit signal d'activation est interrompu, et pour fournir au cours de cette période d'émission des impulsions de 'plucking' dans ledit circuit résonant de manière à entretenir ledit signal électrique oscillant en maintenant au moins une certaine amplitude de ce signal électrique oscillant; ce transpondeur étant **caractérisé en ce qu'**il comprend un circuit de détermination d'un seuil de tension variable pour le déclenchement desdites impulsions de 'plucking', ce circuit de détermination d'un seuil de tension variable définissant, pour chaque impulsion de 'plucking' ou pour chaque groupe d'impulsions de 'plucking' successives, un seuil de tension spécifique qui est inférieur en valeur absolue à la dernière tension de crête mesurée par ledit détecteur de tension de crête relativement à la tension milieu dudit signal électrique oscillant et dépendant de cette dernière tension de crête mesurée ; et **en ce que** le transpondeur est agencé pour déclencher chaque impulsion de 'plucking' lorsque la tension de ce signal électrique oscillant atteint sensiblement ledit seuil de tension spécifique dans une période respective située avant un extremum du signal électrique oscillant et dans l'alternance de cet extremum.

2. Transpondeur passif selon la revendication 1, **caractérisé en ce que** ledit seuil de tension variable est déterminé de manière à être situé dans une plage comprise entre 50% et 90% de la dernière tension de crête mesurée relativement à la tension milieu dudit signal électrique oscillant.

3. Transpondeur passif selon la revendication 1 ou 2, **caractérisé en ce que** ledit redresseur est un redresseur à deux alternances.

4. Transpondeur passif selon la revendication 3, **caractérisé en ce que** le détecteur de tension de crête mesure la tension de crête dans la première alternance de chaque oscillation dudit signal électrique oscillant, et **en ce que** ledit circuit de détermination d'un seuil de tension variable détermine à nouveau, suite à chaque mesure de la tension de crête, ladite tension de seuil spécifique pour le déclenchement d'une impulsion de 'plucking' dans la seconde alternance de la même oscillation.

5. Transpondeur passif selon la revendication 3, **caractérisé en ce qu'**il comprend deux interrupteurs (20, 21) agencés respectivement entre les deux bornes de la capacité d'entrée et la capacité de stockage de manière à permettre de fournir des impulsions de 'plucking' dans chaque alternance dudit signal électrique oscillant.

6. Transpondeur passif selon l'une quelconque des revendications précédentes, **caractérisé en ce qu'**il comprend en outre :
- un circuit logique (14);
- des moyens (16) pour engendrer un signal d'horloge;
- un modulateur (18) relié en entrée au circuit logique et en sortie au circuit résonant, cet interrupteur étant commandé par ledit circuit logique;
et **en ce que** ledit circuit logique gère l'alimentation du circuit résonant par ladite capacité de stockage pendant ladite période d'émission en variant la durée (D0, D1, D2) desdites impulsions de 'plucking', nommée durée de 'plucking'.

7. Transpondeur passif selon la revendication 6, **caractérisé en ce que** chaque tension de crête mesurée par ledit détecteur de tension de crête est traitée par ledit circuit logique (14) pour déterminer ladite durée de 'plucking' au moins d'une prochaine impulsion de 'plucking' dans une alternance suivante ou ultérieure du signal électrique oscillant.

8. Transpondeur passif selon la revendication 7, **caractérisé en ce que** le circuit logique est agencé pour ajuster la durée de 'plucking' par pas.

9. Transpondeur passif selon la revendication 7 ou 8, **caractérisé en ce que**, lorsque ladite valeur de tension de crête est supérieure à une première tension de référence, ledit circuit logique diminue ladite durée de 'plucking' au moins d'une prochaine impulsion de 'plucking'.

10. Transpondeur passif selon la revendication 9, **caractérisé en ce que** la première tension de référence est une fonction de la tension (V_{Cap}) de ladite capacité de stockage sur ladite période d'émission.

11. Transpondeur passif selon la revendication 9 ou 10, **caractérisé en ce que**, lorsque la tension de crête est inférieure à une seconde tension de référence, ledit circuit logique augmente ladite durée de 'plucking' au moins d'une prochaine impulsion de 'plucking'.

12. Transpondeur passif selon la revendication 11, **caractérisé en ce que** la seconde tension de référence est une fonction de la tension (V_{Cap}) de ladite capacité de stockage sur ladite période d'émission ou de ladite première tension de référence.

13. Transpondeur passif selon la revendication 11 ou 12, **caractérisé en ce que** ladite seconde tension de référence est identique à ladite première tension de référence (V_{Ref}).

14. Transpondeur passif selon l'une des revendications 1 à 3, **caractérisé en ce que**, lorsqu'il envoie ledit signal de communication audit lecteur, ladite valeur de la tension de crête est mesurée seulement périodiquement après un certain nombre de périodes d'oscillation dudit signal électrique oscillant.

## Patentansprüche

1. Passiver Transponder vom Halbduplextyp (2), umfassend:
- einen Schwingkreis (4), der durch eine Antenne (6) und eine Eingangskapazität (8) gebildet ist und angeordnet ist, um zu ermöglichen, dass ein elektrisches Signal (32) in dem Schwingkreis schwingt, wenn er periodisch über die Antenne ein Aktivierungssignal eines Lesers empfängt;
- einen Gleichrichter (10), der dem Schwingkreis nachgeschaltet angeordnet ist;
- eine Energiespeicherkapazität (12), die dem Gleichrichter nachgeschaltet angeordnet ist;
- mindestens einen Schalter (20, 21), der zwischen der Eingangskapazität und der Speicherkapazität angeordnet ist, um diese zwei Kapazitäten parallel zu schalten, wenn der Schalter geschlossen ist (ON);
- einen Spitzenspannungsdetektor (22), der angeordnet ist, um die Amplitude des elektrischen Schwingungssignals (32) im Schwingkreis zu messen;
wobei dieser Transponder angeordnet ist, um mindestens ein Kommunikationssignal zum Leser in einer Sendeperiode zu senden, in der das Aktivierungssignal unterbrochen ist, und um im Verlauf dieser Sendeperiode "Plucking"-Impulse in den Schwingkreis zu liefern, um das elektrische Schwingungssignal durch Aufrechterhalten mindestens einer bestimmten Amplitude dieses elektrischen Schwingungssignals aufrecht zu erhalten; wobei dieser Transponder **dadurch gekennzeichnet ist, dass** er eine Schaltung zur Bestimmung eines variablen Spannungsschwellenwerts für das Auslösen der "Plucking"-Impulse umfasst, wobei diese Schaltung zur Bestimmung eines variablen Spannungsschwellenwerts für jeden "Plucking"-Impuls oder für jede Gruppe von aufeinander folgenden "Plucking"-Impulsen einen spezifischen Spannungsschwellenwert definiert, der im Absolutwert geringer ist als die letzte Spitzenspannung, die durch den Spitzenspannungsdetektor in Bezug auf die mittlere Spannung des elektrischen Schwingungssignals gemessen wird, und von dieser letzten gemessenen Spitzenspannung abhängt; und dadurch, dass der Transponder angeordnet ist, um jeden "Plucking"-Impuls auszulösen, wenn die Spannung von diesem elektrischen Schwingungssignal im Wesentlichen den spezifischen Spannungsschwellenwert in einem jeweiligen Zeitraum erreicht, der vor einem Extremwert des elektrischen Schwingungssignals und in der Halbschwingung dieses Extremwerts liegt.

2. Passiver Transponder nach Anspruch 1, **dadurch gekennzeichnet, dass** der variable Spannungsschwellenwert so bestimmt wird, dass er in einem Bereich zwischen 50 % und 90 % der letzten gemessenen Spitzenspannung in Bezug auf die mittlere Spannung des elektrischen Schwingungssignals liegt.

3. Passiver Transponder nach Anspruch 1 oder 2, **dadurch gekennzeichnet, dass** der Gleichrichter ein Zweiweggleichrichter ist.

4. Passiver Transponder nach Anspruch 3, **dadurch gekennzeichnet, dass** der Spitzenspannungsdetektor die Spitzenspannung in der ersten Halbschwingung jeder Schwingung des elektrischen Schwingungssignals misst, und dadurch, dass die Schaltung zur Bestimmung eines variablen Spannungsschwellenwerts erneut im Anschluss an jede Messung der Spitzenspannung die spezifische Schwellenspannung für das Auslösen eines "Plucking"-Impulses in der zweiten Halbschwingung derselben Schwingung bestimmt.

5. Passiver Transponder nach Anspruch 3, **dadurch gekennzeichnet, dass** er zwei Schalter (20, 21) umfasst, die jeweils zwischen den zwei Anschlüssen der Eingangskapazität und der Speicherkapazität angeordnet sind, um es zu ermöglichen, "Plucking"-Impulse in jeder Halbschwingung des elektrischen Schwingungssignals zu liefern.

6. Passiver Transponder nach einem der vorangehenden Ansprüche, **dadurch gekennzeichnet, dass** er außerdem umfasst:
- eine logische Schaltung (14);
- Mittel (16) zum Erzeugen eines Taktsignals;
- einen Modulator (18), der am Eingang mit der logischen Schaltung und am Ausgang mit dem Schwingkreis verbunden ist, wobei dieser Schalter durch die logische Schaltung gesteuert wird;
und dadurch, dass die logische Schaltung die Versorgung des Schwingkreises durch die Speicherkapazität während der Sendeperiode durch Verändern der Dauer (D0, D1, D2) der "Plucking"-Impulse steuert, die "Plucking"-Dauer genannt wird.

7. Passiver Transponder nach Anspruch 6, **dadurch gekennzeichnet, dass** jede Spitzenspannung, die durch den Spitzenspannungsdetektor gemessen wird, durch die logische Schaltung (14) verarbeitet wird, um die "Plucking"-Dauer mindestens eines nächsten "Plucking"-Impulses in einer folgenden oder späteren Halbschwingung des elektrischen Schwingungssignals zu bestimmen.

8. Passiver Transponder nach Anspruch 7, **dadurch gekennzeichnet, dass** die logische Schaltung angeordnet ist, um die "Plucking"-Dauer in Schritten einzustellen.

9. Passiver Transponder nach Anspruch 7 oder 8, **dadurch gekennzeichnet, dass**, wenn der Spitzenspannungswert höher ist als eine erste Referenzspannung, die logische Schaltung die "Plucking"-Dauer mindestens eines nächsten "Plucking"-Impulses verringert.

10. Passiver Transponder nach Anspruch 9, **dadurch gekennzeichnet, dass** die erste Referenzspannung eine Funktion der Spannung (V_{Cap}) der Speicherkapazität über die Sendeperiode ist.

11. Passiver Transponder nach Anspruch 9 oder 10, **dadurch gekennzeichnet, dass**, wenn die Spitzenspannung geringer ist als eine zweite Referenzspannung, die logische Schaltung die "Plucking"-Dauer mindestens eines nächsten "Plucking"-Impulses erhöht.

12. Passiver Transponder nach Anspruch 11, **dadurch gekennzeichnet, dass** die zweite Referenzspannung eine Funktion der Spannung (V_{Cap}) der Speicherkapazität über die Sendeperiode oder der ersten Referenzspannung ist.

13. Passiver Transponder nach Anspruch 11 oder 12, **dadurch gekennzeichnet, dass** die zweite Referenzspannung mit der ersten Referenzspannung (V_{Ref}) identisch ist.

14. Passiver Transponder nach einem der Ansprüche 1 bis 3, **dadurch gekennzeichnet, dass**, wenn er das Kommunikationssignal zum Leser sendet, der Wert der Spitzenspannung nur periodisch nach einer bestimmten Anzahl von Schwingungsperioden des elektrischen Schwingungssignals gemessen wird.

## Claims

1. Half-duplex passive transponder (2) including:
- a resonant circuit (4) formed by an antenna (6) and an input capacitor (8) and arranged to allow an electrical signal (32) to oscillate in the resonant circuit when the transponder periodically receives across the antenna an activation signal from a reader;
- a rectifier (10) arranged downstream of the resonant circuit;
- an energy storage capacitor (12) arranged downstream of the rectifier;
- at least one switch (20, 21) arranged between the input capacitor and the storage capacitor so that the two capacitors are placed in parallel when the switch is turned on (ON);
- a peak voltage detector (22) arranged to measure the amplitude of said electrical signal (32) oscillating in said resonant circuit;
wherein said transponder is arranged to send at least one communication signal to said reader in a transmission period when said activation signal is interrupted, and to deliver plucking pulses during said transmission period in said resonant circuit so as to sustain said oscillating electrical signal while maintaining at least a certain amplitude of said oscillating electrical signal; said transponder being **characterized in that** it includes a circuit for determining a variable voltage threshold used to trigger said plucking pulses, the variable voltage threshold determination circuit defining, for each plucking pulse or for each group of successive plucking pulses, a specific voltage threshold which is lower in absolute value than the last peak voltage measured by said peak voltage detector relative to the middle voltage of said oscillating electrical signal and is dependent on the last measured peak voltage; and **in that** the transponder is arranged to trigger each plucking pulse when the voltage of said oscillating electrical signal substantially attains said specific voltage threshold in a respective period before an extremum of said oscillating electrical signal and in the half-cycle of said extremum.

2. Passive transponder according to claim 1, **characterized in that** said variable voltage threshold is defined to be within a range of between 50% and 90% of the last measured peak voltage relative to the middle voltage of said oscillating electrical signal.

3. Passive transponder according to claim 1 or 2, **characterized in that** said rectifier is a full-wave rectifier.

4. Passive transponder according to claim 3, **characterized in that** the peak voltage detector measures the peak voltage in the first half-cycle of each oscillation of said oscillating electrical signal, and **in that**, after each peak voltage measurement, said variable voltage threshold determination circuit redefines said specific threshold voltage used to trigger a plucking pulse in the second half-cycle of the same oscillation.

5. Passive transponder according to claim 3, **characterized in that** the transponder includes two switches (20, 21) respectively arranged between the two terminals of the input capacitor and the storage capacitor so as to deliver plucking pulses in each half-cycle of said oscillating electrical signal.

6. Passive transponder (1) according to any of the preceding claims, **characterized in that** it further includes:
- - a logic circuit (14);
- - a means (16) of generating a clock signal;
- - a modulator (18) connected at input to the logic circuit and at output to the resonant circuit, said switch being controlled by said logic circuit;
and **in that** said logic circuit manages the powering of the resonant circuit by said storage capacitor during said transmission period by varying the duration (D0, D1, D2) of said plucking pulses, called the plucking duration.

7. Passive transponder according to claim 6, **characterized in that** each peak voltage measured by said peak voltage detector is processed by said logic circuit (14) to determine said plucking duration of at least one following plucking pulse in a following or subsequent half-cycle of the oscillating electrical signal.

8. Passive transponder according to claim 7, **characterized in that** the logic circuit is arranged to adjust the plucking duration in steps.

9. Passive transponder according to claim 7 or 8, **characterized in that**, when said peak voltage value is higher than a first reference voltage, said logic circuit decreases said plucking duration of at least one following plucking pulse.

10. Passive transponder according to claim 9, **characterized in that** the first reference voltage is a function of the voltage (V_{Cap}) of said storage capacitor in said transmission period.

11. Passive transponder according to claim 9 or 10, **characterized in that**, when the peak voltage is lower than a second reference voltage, said logic circuit increases said plucking duration of at least one following plucking pulse.

12. Passive transponder according to claim 11, **characterized in that** the second reference voltage is a function of the voltage (V_{Cap}) of said storage capacitor in said transmission period or of said first reference voltage.

13. Passive transponder according to claim 11 or 12, **characterized in that** said second reference voltage is identical to said first reference voltage (V_{Ref}).

14. Passive transponder according to any of claims 1 to 3, **characterized in that**, when the transponder sends said communication signal to said reader, said peak voltage value is only periodically measured after a certain number of oscillation periods of said oscillating electrical signal.
